# EUROPÄISCHE PATENTANMELDUNG

(11) **EP 2 460 708 A2**
(43) Veröffentlichungstag der Anmeldung: **06.06.2012**
(21) Anmeldenummer: 11188010.0
(22) Anmeldetag: 07.11.2011
(51) Int. Cl.: B60W 30/18, B60W 10/06, B60W 10/02

(54) **Verfahren zur Bestimmung einer Kraftstoffeinsparung einer Rollfunktion**

(30) Priorität: 03.12.2010 DE 102010062380
(71) Anmelder: ZF Friedrichshafen AG, 88038 Friedrichshafen (DE)
(72) Erfinder: Würthner, Maik, 88677 Markdorf (DE); Staudinger, Joachim, 88214 Ravensburg (DE); Kemler, Johannes, 88212 Ravensburg (DE)

(57) **Zusammenfassung**

Verfahren zur Bestimmung einer durch eine Rollfunktion eines Antriebsstrangs erzielbaren bzw. erzielten Kraftstoffeinsparung, wobei der Antriebsstrang einen Verbrennungsmotor (1) und ein zwischen denselben und einen Abtrieb (3) geschaltetes Getriebe (2) aufweist, wobei in der Rollfunktion der Verbrennungsmotor (1) vom Abtrieb (3) abgekoppelt ist und mit Leerlaufdrehzahl betrieben wird, wobei aus der Leerlaufdrehzahl ein Kraftstoffverbrauch des Verbrennungsmotors (1) bei aktivierter Rollfunktion ermittelt wird, wobei aus einer Abtriebdrehzahl und einer Getriebeübersetzung für die deaktivierte Rollfunktion eine Motordrehzahl und aus dieser Motordrehzahl unter der Annahme eines Getriebeausgangsmoments von in etwa Null ein Kraftstoffverbrauch des Verbrennungsmotors (1) bei deaktivierter Rollfunktion ermittelt wird, und wobei aus der aufsummierten Differenz zwischen dem Kraftstoffverbrauch bei deaktivierter Rollfunktion und dem Kraftstoffverbrauch bei aktivierter Rollfunktion die durch die Rollfunktion erzielbare bzw. erzielte Kraftstoffeinsparung ermittelt wird.

## Beschreibung

Die Erfindung betrifft ein Verfahren zur Bestimmung einer durch eine Rollfunktion eines Antriebsstrangs erzielbaren bzw. erzielten Kraftstoffeinsparung.

Es besteht zunehmend Bedarf, den Kraftstoffverbrauch von Kraftfahrzeugen zu senken. Eine Möglichkeit, mithilfe derer der Kraftstoffverbrauch von Kraftfahrzeugen gesenkt werden kann, ist die Ausnutzung einer Rollfunktion für den Antriebsstrang, wobei in einer Rollfunktion der Antriebsstrang des Kraftfahrzeugs derart getrennt ist, dass ein Verbrennungsmotor vom Abtrieb abgekoppelt ist und mit Leerlaufdrehzahl läuft.

Obwohl eine derartige Rollfunktion für einen Antriebsstrang grundsätzlich bekannt ist, ist bislang eine mit einer solche Rollfunktion erzielbare Kraftstoffeinsparung für den Fahrer nicht nachvollziehbar, sodass die Akzeptanz für derartige Rollfunktionen beschränkt ist.

Aus der DE 10 2009 031 085 A1 sind Verfahren zur Optimierung des Kraftstoffverbrauchs von Kraftfahrzeugen bekannt, mithilfe derer einem Fahrer eine Fahrgeschwindigkeitsempfehlung angezeigt werden kann, um den Kraftstoffverbrauch des Kraftfahrzeugs zu senken.

Hiervon ausgehend liegt der Erfindung die Aufgabe zugrunde, ein Verfahren zur Bestimmung einer durch eine Rollfunktion erzielbaren bzw. erzielten Kraftstoffeinsparung zu schaffen, mit welchem die fahrerseitige Akzeptanz einer Rollfunktion erhöht werden kann.

Diese Aufgabe wird nach einem ersten Aspekt der Erfindung durch ein Verfahren gemäß Anspruch 1 gelöst.

Hiernach wird aus der Leerlaufdrehzahl des Verbrennungsmotors ein Kraftstoffverbrauch bei aktivierter Rollfunktion ermittelt, wobei aus einer Abtriebdrehzahl und einer Getriebeübersetzung für die deaktivierte Rollfunktion eine Motordrehzahl und aus dieser Motordrehzahl unter der Annahme eines Getriebeausgangsmoments von in etwa Null ein Kraftstoffverbrauch bei deaktivierter Rollfunktion ermittelt wird, und wobei aus der aufsummierten Differenz zwischen dem Kraftstoffverbrauch bei deaktivierter Rollfunktion und dem Kraftstoffverbrauch bei aktivierter Rollfunktion die durch die Rollfunktion erzielbare bzw. erzielte Kraftstoffeinsparung ermittelt wird.

Diese Aufgabe wird nach einem zweiten Aspekt der Erfindung durch ein Verfahren gemäß Anspruch 4 gelöst.

Hiernach wird für eine aktivierte Rollfunktion aus einer Motordrehzahl und einem Motormoment ein Kraftstoffverbrauch bei aktivierter Rollfunktion ermittelt wird, wobei für eine deaktivierte Rollfunktion aus einer Motordrehzahl und einem Motormoment ein Kraftstoffverbrauch bei deaktivierter Rollfunktion ermittelt wird, und wobei die Differenz zwischen dem Kraftstoffverbrauch bei deaktivierter Rollfunktion und dem Kraftstoffverbrauch bei aktivierter Rollfunktion der durch die Rollfunktion erzielbaren bzw. erzielten Kraftstoffeinsparung entspricht.

Mit beiden erfindungsgemäßen Aspekten ist es möglich, die durch eine Rollfunktion erzielbare bzw. erzielte Kraftstoffeinsparung auf einfachem Weg zu ermitteln und so die fahrerseitige Akzeptanz einer solchen Rollfunktion zu erhöhen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

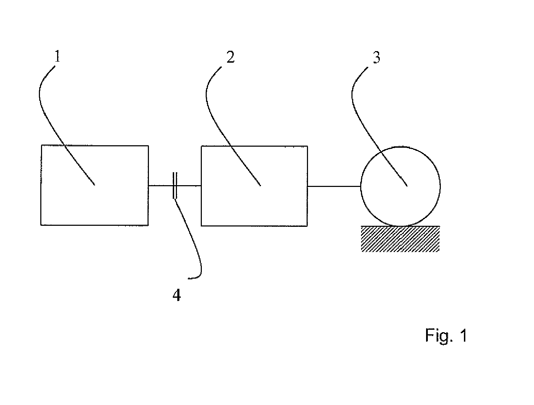

- Fig. 1: eine schematisierte Darstellung eines Antriebsstrangs eines Kraftfahrzeugs.

Die hier vorliegende Erfindung betrifft Verfahren zur Bestimmung einer durch eine Rollfunktion eines Antriebsstrangs eines Kraftfahrzeugs erzielbaren bzw. erzielten Kraftstoffeinsparung.

Fig. 1 zeigt ein stark schematisiertes Antriebsstrangschema eines Kraftfahrzeugs, welches einen Verbrennungsmotor 1, ein Getriebe 2 und einen Abtrieb 3 umfasst, wobei das Getriebe 2 zwischen den Verbrennungsmotor 1 und den Abtrieb 3 geschaltet ist und das Zugkraftangebot des Verbrennungsmotors 1 am Abtrieb 3 bereitstellt.

Bei dem Getriebe 2 handelt es sich vorzugsweise um ein automatisches bzw. automatisiertes Schaltgetriebe mit mehreren Gängen und damit Getriebe-übersetzungen.

Zusätzlich zeigt Fig. 1 ein als Anfahrkupplung 4 ausgebildetes Anfahrelement, welches zwischen den Verbrennungsmotor 1 und das Getriebe 2 geschaltet ist. Bei diesem Anfahrelement handelt es sich in Fig. 1 um eine getriebeexterne Anfahrkupplung 4. Anstelle einer getriebeexternen Anfahrkupplung 4 kann auch ein getriebeinternes Anfahrelement zum Einsatz kommen.

Dann, wenn ein Kraftfahrzeug in einer Rollfunktion betrieben wird, ist der Verbrennungsmotor 1 vom Abtrieb 3 abgekoppelt und wird mit Leerlaufdrehzahl betrieben. Der Verbrennungsmotor 1 kann dadurch vom Abtrieb 3 abgekoppelt werden, dass die Anfahrkupplung 4 geöffnet wird und/oder das Getriebe 2 in eine Neutralstellung überführt wird.

Nach einem ersten Aspekt der Erfindung wird die mit einer Rollfunktion erzielbare bzw. erzielte Kraftstoffeinsparung derart ermittelt, dass einerseits aus der Leerlaufdrehzahl des Verbrennungsmotors 1 ein Kraftstoffverbrauch des Verbrennungsmotors 1 bei aktivierter Rollfunktion ermittelt wird, und dass andererseits aus einer Abtriebsdrehzahl und einer Getriebeübersetzung für die deaktivierte Rollfunktion eine Motordrehzahl des Verbrennungsmotors 1 und aus dieser Motordrehzahl unter Annahme eines Getriebeausgangsmoments von in etwa Null ein Kraftstoffverbrauch des Verbrennungsmotors 1 bei deaktivierter Rollfunktion ermittelt wird, wobei aus der aufsummierten Differenz zwischen dem Kraftstoffverbrauch bei deaktivierter Rollfunktion und dem Kraftstoffverbrauch bei aktivierter Rollfunktion die durch die Rollfunktion erzielbare bzw. erzielte Kraftstoffeinsparung ermittelt wird.

Nach dem ersten Aspekt der Erfindung wird als Kraftstoffverbrauch bei aktivierter Rollfunktion ein tatsächlicher, momentaner Kraftstoffverbrauch des Verbrennungsmotors 1 kennlinienabhängig aus der Leerlaufdrehzahl des Verbrennungsmotors 1 ermittelt.

Als Kraftstoffverbrauch bei deaktivierter Rollfunktion wird nach dem ersten Aspekt der Erfindung ein theoretischer, momentaner Kraftstoffverbrauch des Verbrennungsmotors 1 kennlinienabhängig aus der theoretischen Motordrehzahl ermittelt, wobei sich die theoretische Motordrehzahl aus der tatsächlichen Abtriebsdrehzahl des Abtriebs 3 und einer theoretischen Getriebeübersetzung für die deaktivierte Rollfunktion unter der Annahme eines Ausgangsmoments des Getriebes 2 von Null ergibt.

Bei der theoretischen Getriebeübersetzung für die deaktivierte Rollfunktion handelt es sich vorzugsweise um die Übersetzung des vor der Rollfunktion zuletzt eingelegten Gangs. Alternativ kann zur Ermittlung der theoretischen Motordrehzahl die Übersetzung des höchsten verfügbaren Gangs, also der Gang mit der kleinsten Übersetzung, gewählt werden.

Aus der aufsummierten Differenz zwischen dem theoretischen Kraftstoffverbrauch bei deaktivierter Rollfunktion und dem tatsächlichen Kraftstoffverbrauch bei aktivierter Rollfunktion wird dann die mit der Rollfunktion erzielte Kraftstoffeinsparung ermittelt und einem Fahrer in einem Anzeigeinstrument des Kraftfahrzeugs angezeigt.

Nach dem ersten Aspekt der Erfindung wird demnach vorzugsweise abhängig vom Arbeitstakt einer Steuerungseinrichtung des Antriebsstrangs, zum Beispiel alle 10 ms, einerseits der tatsächliche, momentane Kraftstoffverbrauch der Rollfunktion und andererseits der theoretische, momentane Kraftstoffverbrauch für eine deaktivierte Rollfunktion ermittelt, wobei der theoretische, momentane Kraftstoffverbrauch für die deaktivierte Rollfunktion unter der Annahme eines Getriebeausgangsmoments von Null abhängig von einer theoretischen Motordrehzahl des Verbrennungsmotors 1 ermittelt wird, wobei sich diese theoretische Motordrehzahl des Verbrennungsmotors 1 aus der tatsächliche Abtriebsdrehzahl des Abtriebs 3 und einer theoretischen Getriebeübersetzung des Getriebes 2 ergibt. Der tatsächliche, momentane Kraftstoffverbrauch für die aktivierte Rollfunktion ergibt sich kennlinienabhängig aus der Leerlaufdrehzahl des Verbrennungsmotors 1. Durch Aufsummierung dieser Differenzen zwischen dem theoretischen, momentanen Kraftstoffverbrauch und dem tatsächlichen, momentanen Kraftstoffverbrauch kann dann die durch die Rollfunktion erzielte Kraftstoffeinsparung ermittelt und kontinuierlich anzeigt werden.

Nach dem ersten Aspekt der Erfindung wird demnach zur Ermittlung der mit einer Rollfunktion erzielten bzw. erzielbaren Kraftstoffeinsparung ausschließlich der Antriebsstrang in der Rollfunktion bei getrenntem Antriebsstrang betrachtet, die Kraftstoffeinsparung wird demnach ausschließlich abhängig von der Leerlaufdrehzahl des Verbrennungsmotors 1 und abhängig von einer theoretischen Motordrehzahl bei deaktivierter Rollfunktion bestimmt.

Diese Ermittlung der Kraftstoffeinsparung nach dem ersten Aspekt der Erfindung ist zwar einfach, lässt jedoch Fahrgeschwindigkeiten des Kraftfahrzeugs vor dem Trennen des Antriebsstrangs und nach dem Trennen desselben außer Betracht.

Nach einem zweiten Aspekt der Erfindung wird eine mit einer Rollfunktion erzielbare bzw. erzielte Kraftstoffeinsparung derart ermittelt, dass für eine aktivierte Rollfunktion aus einer Motordrehzahl und einem Motormoment ein Kraftstoffverbrauch des Verbrennungsmotors 1 bei aktivierter Rollfunktion ermittelt wird, dass für eine deaktivierte Rollfunktion aus einer Motordrehzahl und einem Motormoment ein Kraftstoffverbrauch des Verbrennungsmotors 1 bei deaktivierter Rollfunktion ermittelt wird, und dass die Differenz zwischen dem Kraftstoffverbrauch bei deaktivierter Rollfunktion und dem Kraftstoffverbrauch bei aktivierter Rollfunktion der durch die Rollfunktion erzielbaren bzw. erzielten Kraftstoffeinsparung entspricht.

Nach dem zweiten Aspekt der Erfindung wird hierzu im Detail so vorgegangen, dass als Kraftstoffverbrauch bei aktivierter Rollfunktion ein tatsächlicher Kraftstoffverbrauch aus der tatsächlichen Drehzahl des Verbrennungsmotors und dem tatsächlichen Moment des Verbrennungsmotors über ein Muschelkennfeld des Verbrennungsmotors durch Aufsummierung über der zeitlichen Dauer der Rollfunktion ermittelt wird, wobei die zeitliche Dauer der Rollfunktion einerseits durch den Zeitpunkt des Beginns der Rollfunktion, also durch den Zeitpunkt des Trennens des Antriebsstrangs, und andererseits durch den Zeitpunkt bestimmt wird, in welchem der Antriebsstrang wieder geschlossen ist und derselbe seine Ausgangsgeschwindigkeit vor dem Beginn der Rollfunktion wieder erreicht hat.

Diese zeitliche Dauer schließt also auch Zeitpunkte ein, in welchen der Antriebsstrang geschlossen ist und demnach der Verbrennungsmotor 1 nicht mit Leerlaufdrehzahl betrieben wird.

Als Kraftstoffverbrauch bei deaktivierter Rollfunktion wird nach dem zweiten Aspekt der Erfindung ein theoretischer Kraftstoffverbrauch aus der theoretischen Drehzahl des Verbrennungsmotors, die sich unter Annahme einer konstanten Geschwindigkeit des Antriebsstrangs aus der entsprechenden Abtriebsdrehzahl des Abtriebs 3 und einer theoretischen Getriebeübersetzung des Getriebes 2 ergibt, und dem theoretischen Motormoment, das zur Aufrechterhaltung der konstanten Geschwindigkeit erforderlich ist, ermittelt wird, nämlich wiederum über das Muschelkennfeld des Verbrennungsmotors 1 durch Aufsummierung über der zeitlichen Dauer der Rollfunktion. Diese zeitliche Dauer der Rollfunktion entspricht wiederum der Zeit, die zwischen dem Trennen des Antriebsstrangs sowie den Schließen desselben und dem Erreichen der Ausgangsgeschwindigkeit vor dem Trennen des Antriebsstrangs vergeht.

Das theoretische Motormoment, das zur Aufrechterhaltung der konstanten Geschwindigkeit bei theoretisch deaktivierter Rollfunktion erforderlich wäre, wird von der Getriebesteuerung aus einem Fahrwiderstand ermittelt.

Die Differenz zwischen dem theoretischen Kraftstoffverbrauch bei deaktivierter Rollfunktion und dem tatsächlichen Kraftstoffverbrauch bei aktivierter Rollfunktion, die jeweils durch Aufsummierung über die Zeitdauer der Rollfunktion unter Verwendung des Muschelkennfelds des Verbrennungsmotors 1 ermittelt werden, ergibt die durch die Rollfunktion erzielte Kraftstoffeinsparung.

Da das Verfahren nach dem zweiten Aspekt der Erfindung nicht nur den getrennten Antriebsstrang und demnach die Leerlaufdrehzahl des Verbrennungsmotors 1 betrachtet, sondern vielmehr auch berücksichtigt, wie der Verbrennungsmotor nach Schließen des Antriebsstrangs betrieben wird, um die Ausgangsgeschwindigkeit vor dem Trennen des Antriebsstrangs wieder zu erreichen, ist das Verfahren nach dem zweiten Aspekt der Erfindung genauer als das Verfahren nach dem ersten Aspekt der Erfindung.

Da jedoch beim zweiten Aspekt der Erfindung auch sogenannte Schubabschaltungen, bei welchen bei geschlossenem Antriebsstrang keinerlei Kraftstoff in den Verbrennungsmotor eingebracht wird, berücksichtigt werden können, kann sich unter Umständen durch die Rollfunktion eine negative Kraftstoffeinsparung, also ein Mehrverbrauch an Kraftstoff, ergeben, insbesondere dann, wenn eine Rollfunktion zum Beispiel bedingt durch eine ungünstige Topografie oder durch eine Bremspedalbetätigung eines Fahrers vorzeitig abgebrochen wird.

Nach einer Weiterbildung der Erfindung wird die durch die Rollfunktion erzielbare bzw. erzielte Kraftstoffeinsparung nicht nur auf die obige Art und Weise automatisch ermittelt, sondern vielmehr auch in einem Anzeigeinstrument dem Fahrer automatisch angezeigt, wobei jedoch dann, wenn eine negative Kraftstoffeinsparung ermittelt würde, die Anzeige dieser negative Kraftstoffeinsparung automatisch unterdrückt wird. Nach der Weiterbildung der Erfindung werden demnach dem Fahrer ausschließlich positive Kraftstoffeinsparungen angezeigt.

Wie oben ausgeführt, ist sowohl beim Verfahren nach dem ersten Aspekt der Erfindung als auch beim Verfahren nach dem zweiten Aspekt der Erfindung zur Ermittlung des theoretischen Kraftstoffverbrauchs bei deaktivierter Rollfunktion jeweils eine theoretische Getriebeübersetzung erforderlich, um aus der Abtriebsdrehzahl eine theoretische Drehzahl des Verbrennungsmotors 1 zu ermitteln. Bei dieser theoretischen Getriebeübersetzung handelt es sich vorzugsweise um die Übersetzung des vor der Rollfunktion zuletzt eingelegten Gangs. Alternativ kann auch die Übersetzung eines Gangs gewählt werden, der zur aktuellen Fahrsituation des Kraftfahrzeugs passt. Insbesondere wird die Übersetzung des höchsten verfügbaren Gangs, also des Gangs mit der kleinsten Übersetzung gewählt.

Bei der Anzeige der erzielbaren bzw. erzielten Kraftstoffeinsparung kann einerseits die Menge des eingesparten Kraftstoffs in Litern angezeigt werden, andererseits kann die eingesparte Kraftstoffmenge in einen Geldbetrag umgerechnet und der entsprechende Geldbetrag automatisch im Anzeigeinstrument angezeigt werden.

Die Kraftstoffeinsparung kann je Rollfunktion angezeigt werden. Weiterhin ist es möglich, über mehrere Rollfunktionen eine kumulierte Kraftstoffeinsparung je Tag anzuzeigen. Weiterhin kann über mehrere Tage hinweg eine kumulierte Gesamteinsparung der Rollfunktion des Kraftfahrzeugs generiert werden.

Die obige Ermittlung der mit einer Rollfunktion erzielten Kraftstoffeinsparung sowie die Anzeige derselben erfolgt voll automatisch.

### Bezugszeichen

- 1: Verbrennungsmotor
- 2: Getriebe
- 3: Abtrieb
- 4: Anfahrkupplung

## Patentansprüche

1. Verfahren zur Bestimmung einer durch eine Rollfunktion eines Antriebsstrangs erzielbaren bzw. erzielten Kraftstoffeinsparung, wobei der Antriebsstrang einen Verbrennungsmotor und ein zwischen denselben und einen Abtrieb geschaltetes Getriebe aufweist, und wobei in der Rollfunktion der Verbrennungsmotor vom Abtrieb abgekoppelt ist und mit Leerlaufdrehzahl betrieben wird, **dadurch gekennzeichnet, dass** aus der Leerlaufdrehzahl ein Kraftstoffverbrauch bei aktivierter Rollfunktion ermittelt wird, dass aus einer Abtriebdrehzahl und einer Getriebeübersetzung für die deaktivierte Rollfunktion eine Motordrehzahl und aus dieser Motordrehzahl unter der Annahme eines Getriebeausgangsmoments von in etwa Null ein Kraftstoffverbrauch bei deaktivierter Rollfunktion ermittelt wird, und dass aus der aufsummierten Differenz zwischen dem Kraftstoffverbrauch bei deaktivierter Rollfunktion und dem Kraftstoffverbrauch bei aktivierter Rollfunktion die durch die Rollfunktion erzielbare bzw. erzielte Kraftstoffeinsparung ermittelt wird.

2. Verfahren nach Anspruch 1, **dadurch gekennzeichnet, dass** als Kraftstoffverbrauch bei deaktivierter Rollfunktion ein theoretischer momentaner Kraftstoffverbrauch kennlinienabhängig aus einer theoretischen Motordrehzahl ermittelt wird, wobei die theoretische Motordrehzahl aus der tatsächlichen Abtriebdrehzahl und einer theoretischen Getriebeübersetzung für die deaktivierte Rollfunktion unter der Annahme eines Getriebeausgangsmoments von Null bestimmt wird, und dass als Kraftstoffverbrauch bei aktivierter Rollfunktion ein tatsächlicher momentaner Kraftstoffverbrauch kennlinienabhängig aus der Leerlaufdrehzahl des Verbrennungsmotors ermittelt wird.

3. Verfahren nach Anspruch 2, **dadurch gekennzeichnet, dass** aus der aufsummierten Differenz zwischen dem theoretischen Kraftstoffverbrauch bei deaktivierter Rollfunktion und dem tatsächlichen Kraftstoffverbrauch bei aktivierter Rollfunktion die erzielte Kraftstoffeinsparung ermittelt wird.

4. Verfahren zur Bestimmung einer durch eine Rollfunktion eines Antriebsstrangs erzielbaren bzw. erzielten Kraftstoffeinsparung, wobei der Antriebsstrang einen Verbrennungsmotor und ein zwischen denselben und einen Abtrieb geschaltetes Getriebe aufweist, und wobei in der Rollfunktion der Verbrennungsmotor vom Abtrieb abgekoppelt ist und mit Leerlaufdrehzahl betrieben wird, **dadurch gekennzeichnet, dass** für eine aktivierte Rollfunktion aus einer Motordrehzahl und einem Motormoment ein Kraftstoffverbrauch bei aktivierter Rollfunktion ermittelt wird, dass für eine deaktivierte Rollfunktion aus einer Motordrehzahl und einem Motormoment ein Kraftstoffverbrauch bei deaktivierter Rollfunktion ermittelt wird, und dass die Differenz zwischen dem Kraftstoffverbrauch bei deaktivierter Rollfunktion und dem Kraftstoffverbrauch bei aktivierter Rollfunktion der durch die Rollfunktion erzielbaren bzw. erzielten Kraftstoffeinsparung entspricht.

5. Verfahren nach Anspruch 4, **dadurch gekennzeichnet, dass** als Kraftstoffverbrauch bei aktivierter Rollfunktion ein tatsächlicher Kraftstoffverbrauch aus der tatsächlichen Drehzahl des Verbrennungsmotors und dem tatsächlichen Motormoment desselben über ein Muschelkennfeld des Verbrennungsmotors durch Aufsummierung über der zeitlichen Dauer der Rollfunktion ermittelt wird.

6. Verfahren nach Anspruch 4 oder 5, **dadurch gekennzeichnet, dass** als Kraftstoffverbrauch bei deaktivierter Rollfunktion ein theoretischer Kraftstoffverbrauch aus einer theoretischen Drehzahl des Verbrennungsmotors, die sich unter Annahme einer konstanten Geschwindigkeit aus der entsprechenden Abtriebsdrehzahl und einer theoretischen Getriebeübersetzung ergibt, und dem theoretischen Motormoment, das zur Aufrechterhaltung der konstanten Geschwindigkeit erforderlich ist, über das Muschelkennfeld durch Aufsummierung über der zeitlichen Dauer der Rollfunktion ermittelt wird.

7. Verfahren nach Anspruch 6, **dadurch gekennzeichnet, dass** das theoretische Motormoment, das zur Aufrechterhaltung der konstanten Geschwindigkeit erforderlich ist, aus dem Fahrwiderstand ermittelt wird.

8. Verfahren nach einem der Ansprüche 5 bis 7, **dadurch gekennzeichnet, dass** die zeitliche Dauer der Rollfunktion durch den Beginn der Rollfunktion, nämlich durch den Zeitpunkt des Trennens des Antriebsstrangs, und durch den Zeitpunkt bestimmt wird, in welchem der Antriebsstrang wieder geschlossen ist und derselbe seine Ausgangsgeschwindigkeit vor dem Beginn der Rollfunktion wieder erreicht hat.

9. Verfahren nach einem der Ansprüche 5 bis 8, **dadurch gekennzeichnet, dass** die Differenz zwischen dem theoretischen Kraftstoffverbrauch bei deaktivierter Rollfunktion und dem tatsächlichen Kraftstoffverbrauch bei aktivierter Rollfunktion der durch die Rollfunktion erzielten Kraftstoffeinsparung entspricht.

10. Verfahren nach einem der Ansprüche 1 bis 9, **dadurch gekennzeichnet, dass** die durch die Rollfunktion erzielbare bzw. erzielte Kraftstoffeinsparung automatisch ermittelt und in einem Anzeiginstrument dem Fahrer angezeigt wird.

11. Verfahren nach Anspruch 10, **dadurch gekennzeichnet, dass** bei einer sich durch insbesondere vorzeitigen Abbruch der Rollfunktion einstellenden negativen Kraftstoffeinsparung die Anzeige im Anzeiginstrument automatisch unterdrückt wird.

12. Verfahren nach einem der Ansprüche 1 bis 11, **dadurch gekennzeichnet, dass** die Getriebeübersetzung für die deaktivierte Rollfunktion die Übersetzung des vor der Rollfunktion zuletzt eingelegten Gangs ist.
